# EUROPEAN PATENT SPECIFICATION

(11) **EP 0 636 832 B1**
(45) Date of publication and mention of the grant of the patent: **10.12.1997**
(21) Application number: 94111694.9
(22) Date of filing: 27.07.1994
(51) Int. Cl.: F22B 37/42, F16J 13/24

(54) **Safety cap suitable in particular for tanks of steam producing appliance**
Sicherheitskappe, insbesondere für Dampferzeugerbehälter
Capuchon de sécurité en particulier pour des récipients de générateur de vapeur

(30) Priority: 30.07.1993 IT MI930652 U
(43) Date of publication of application: 01.02.1995
(73) Proprietor: WORD TECHNOLOGIES AG, FL-9490 Vaduz (LI)
(72) Inventor: Fabrini, Mario, Lugano in Massagno (CH)
(74) Representative: Lecce, Giovanni

(56) References cited:
- EP-A- 0 337 528
- EP-A- 0 400 514
- DE-A- 1 678 148
- FR-A- 1 600 373

## Description

This invention relates to a safety cap especially suitable for tanks of steam producing appliances.

More particularly, this invention relates to a cap as specified above, incorporating a device suitable to prevent the opening of the tank in the presence of a given steam pressure existing inside it.

A safety cap for application to a tank of a steam producing appliance is known from EP-A-0 400514. Said disclosed safety cap has the features of the preamble of claim 1.

Several appliances are known to the art that are equipped with a small boiler for the formation of steam; the airlike flow developed by the heating which causes the liquid existing in the boiler to boil, is led, in case of need, to come out of the appliance, to perform operations of humidification or heat-cleaning of surfaces, or to warm fluids. Typical examples of application of this principle are found in several electric household appliances used, for instance, for ironing the washing, cleaning floors and preparing hot drinks.

Among these appliances, those which are used especially in houses to thoroughly clean floors and glass pans are at present greatly appreciated because of their cleansing efficaciousness, associated to a substantial utilization easiness.

In fact, the user has at his disposal a handy appliance, capable of delivering a steam flow through which a thorough cleaning of surfaces is obtained; in this way one does not need to have recourse to the traditional and tiresome hand systems, which do not ensure, among other things, that really high levels of hygiene are reached in the cleaning, given the low temperature which cleansing products are traditionally brought to during their utilization.

The known steam producing appliances utilized have however a severe drawback which involves substantial risks for user's safety. In the case in point, this drawback is constituted by the danger associated to the opening of the tank cap, which can be obtained also when said tank contains boiling water and the steam developed by same. The different systems realized to try to prevent the removal or the simple loosening of the cap are not so efficacious as to absolutely exclude such possibility; in fact, in most cases, safety devices are utilized which, in the presence of tanks under pressure, make the removal or the simple partly unscrewing of the cap difficult, but far from impossible.

Object of this invention is to obviate the aforementioned drawback.

More particularly, object of this invention is to provide a safety cap, especially suitable for steam producing appliances, provided with a safety device suitable to prevent the loosening or unscrewing of said cap in the presence of fluids under pressure withing the steam tank or the boiler.

A further object of this invention is to provide a safety cap furtherly provided with an adjustable exhaust valve, suitable to automatically step in in case of excess pressure inside the tank.

A further object of this invention is to supply users with a safety cap capable of providing a high degree of reliability and resistence in the long run, and also such as to be easily and economically realizable.

These and still further advantages are achieved by the safety cap subject matter of this invention, suitable in particular for application to a tank of a steam producing appliance, comprising a hollow main support body being longitudinally bored and having a substantially cylindrical shape and a back end for connection to a mouth of the tank, a bush fitted on said body and being integral with an external covering of plastic material, and a piston fitted inside said body for longitudinal displacement between a first position and a second position, wherein said body comprises two or more radial through-holes provided around the circumference thereof with a sphere in each through-hole; two or more longitudinal grooves of hemispheric cross-section are formed along the inner surface of said bush, and a groove is formed around the perimeter of said piston at a location corresponding to the through-holes, when said piston is in said second position, whereby said spheres protrude from said through-holes into said longitudinal groove if said piston is in the first position and said spheres are free to protrude into said peripheral groove, thereby releasing said longitudinal groove, if said piston is in the second position".

The technical and functional characteristics of the safety cap subject matter of this invention shall be better explained in the following detailed description, according to a preferred non limitative embodiment, made with reference to the enclosed drawings wherein:
Fig. 1 shows schematically a longitudinal section of the safety cap, to stress the arrangement of the various internal components, in the absence of pressure in the tank;
Fig. 2 shows schematically a longitudinal section of the safety cap, to stress the arrangement of the various internal components in the presence of a normal pressure in the tank;
Fig. 3 shows schematically a longitudinal section of the safety cap, to sress the arrangement of the various internal components in the presence of excess pressure in the tank;
Fig. 4 shows schematically a section of the safety cap along the A-A line of Fig. 1;
Fog. 5 shows schematically a section of the safety cap along the B-B line of Fig. 2.

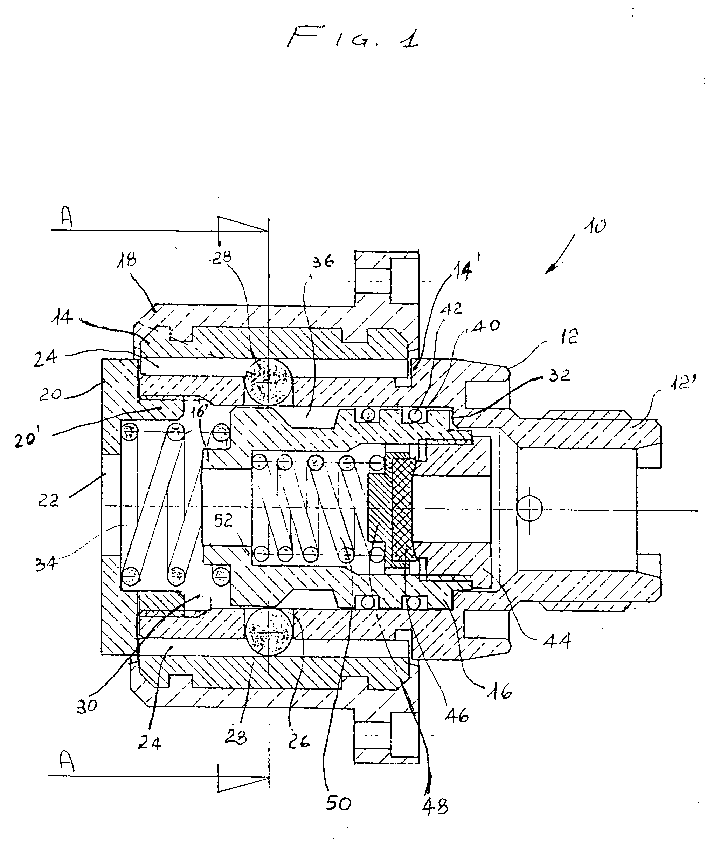

With reference first to Fig. 1, the safety cap subject matter of this invention, indicated on the whole by 10, is basically constituted by a main support hollow body 12, having a substantially cylindrical shape, a bush 14, fitted on said body, and a piston 16, slidingly positioned within said body 12. The latter extends, at one end, forming a smaller diameter tang 12', for the connection, by known means, to the tank or the boiler (not represented) of the steam producing appliance. On the opposing end of body 12 a metal cap 20 is screwed, whose depressed portion 20' engages partly in said body and is connected by means of a generic thread; cap 20 is provided with at least a central hole 22 for exhausting steam. The same cap locks, on body 12, bush 14 which, at the opposing end, strikes an annular portion 14' obtained by increases of the diameter of body 12. Bush 14 is integral with an external covering 18 from moulded plastic material or the like, which performs the function of an internal attachment of the external grip of cap 10 when the latter is screwed or unscrewed.

According to this invention, the inner wall of bush 14 is provided with two or more longitudinally extended grooves 24, having preferably an hemispheric section; in the preferred embodiment of Figs. 1 through 5, said grooves are obtained in number of 4, arranged at 90° relative to one another.

In alignment with each of the grooves 24, along the portion of the body externally circumscribed by bush 14, a through hole 26 is obtained within which a metal sphere 28 is provided whose diameter is slightly smaller that the diameter of said hole. The inside of the hollow body 12 circumscribes a cylindrical chamber 30, depressed at the end near tang 12', to form an annular portion 32, to stop the back travel of the mobile piston 16, as will be explained later on. Said mobile piston 16, longitudinally provided with a hole having different diameters, is housed in said chamber 30; piston 16, provided at the front end with a portion 16' whose diameter is smaller relatively to the rest of the body, has a whole length shorter than chamber 30, circumscribed frontally by base 20' of cap 20, and on the back by the already mentioned annular portion 32. Along the external perimeter of piston 16 a groove 36 is obtained having, by way of example, a trapezoid section, and whose depth is preferably at least equal to half the diameter of sphere 28; said groove is obtained near the front end of piston 16, along the greater diameter portion of same. Behind it, further annular close grooves 40 are obtained, which house as many toric rings 42 or the like, suitable to realize the pressure tightness between piston 16 and body 12 wherein the former is located.

Between the front end portion 16' of piston 16 and the inner wall of cap 20 screwed on to body 12, a suitably calibrated spring 34 is provided, which tends to keep under tension said piston and, in conditions of absence of steam pressure within cap 10, locks its back end against portion 32 of body 12.

According to a further development of this invention, said piston 16 is advantageously provided with a valve suitable to automatically step in in the presence of excess steam pressure within body 10. Said valve is constituted by a ring 44 screwed at the back end of piston 16, on whose front head a gasket 46 is provided, made preferably from rubber or a thermoplastic material.

Said gasket is made up by a disk having a diameter greater than the diameter of ring 44 and is preferably coupled to a guiding and centering metal support 48; on said support a suitably calibrated spring (50) rests, which extends into the inside of piston 16 striking its smaller diameter front end 52.

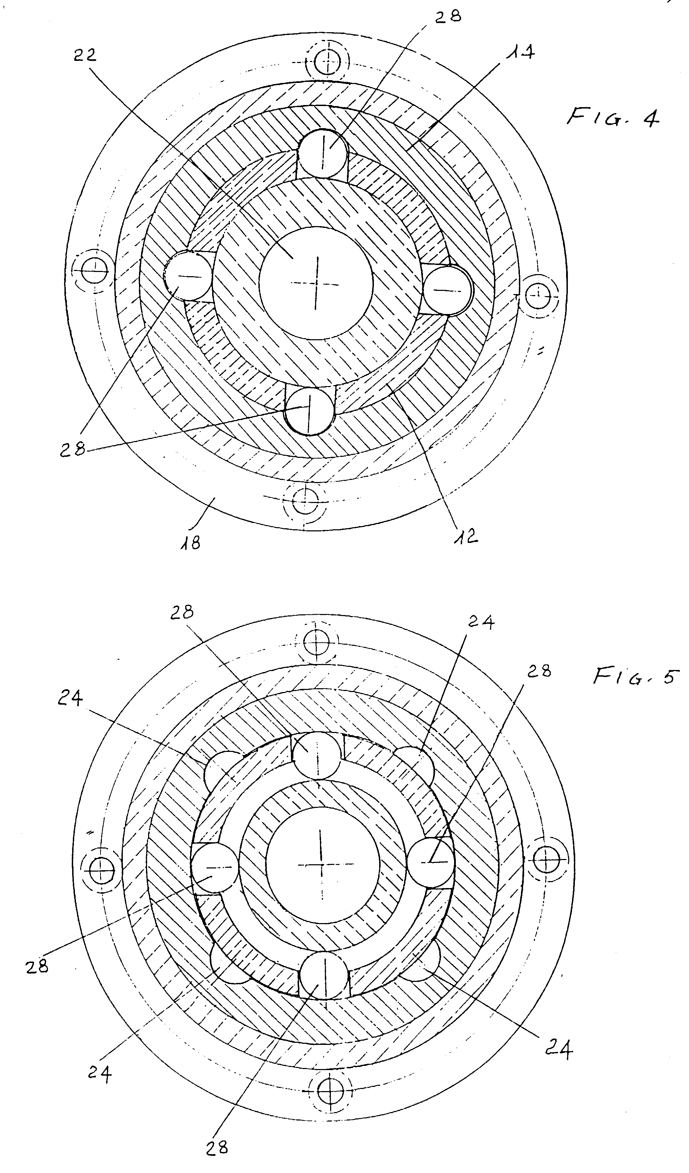

Figs. 1 and 4 show schematically the situation in which there is no pressure in the boiler to which cap 10 is applied; spring 34 pushes piston 16 towards the back wall of body 12, until the latter strikes portion 32. Spheres 28 protrude towards the external bush 14 and rest in threads 24, constituting as many elements that drag said bush and the associated covering 18; for the remaining part, said spheres take up holes 26 up to brushing the inner piston 16. This arrangement of the mentioned members allow to hand loose and unscrew cap 10, starting from covering 18, which performs the function of a grip and is integral with bush 14. Therefore, the fluid, generally water, to be brought to the boiling point, can be poured into the boiler through hole or holes 22 of cap 20. Also spring 50 inside piston 16 is in condition of utmost extension, so that gasket 46 closes on the hole of ring 44.

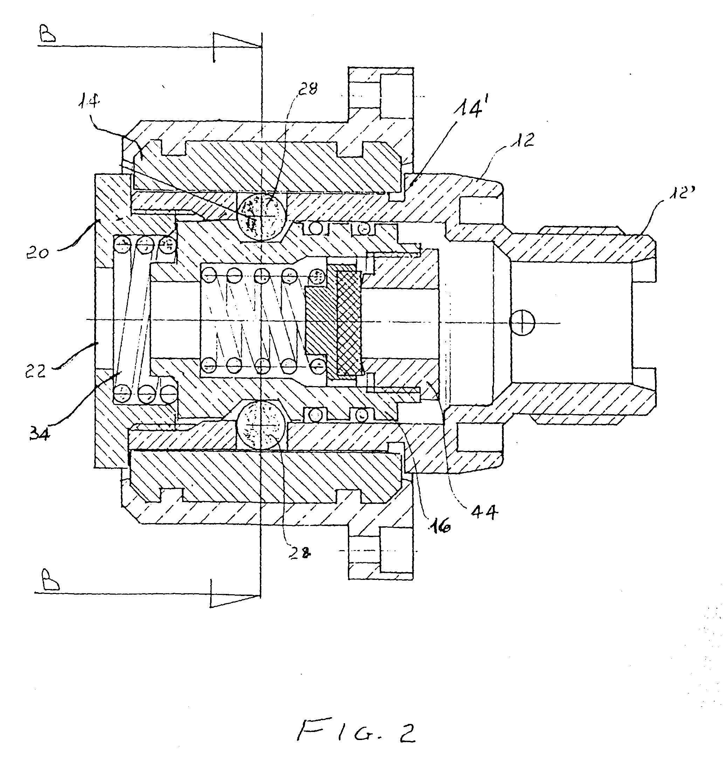

As pressure builds up in the boiler, the steam pushes forwards ring 44, which, due to the interposition of supports 48, compresses spring 34; the latter drags forwards piston 16 until groove 36 is brought in correspondence with spheres 28. The latter, lacking a support, go down partly by gravity into said groove 36, disengaging from the longitudinal grooves 24 provided in the external bush 14; for the resting part, equal to about half their volume, said spheres remain in holes 26 of body 12, brushing the inner part of said bush. This situation is schematically shown on Fig. 2, and in section on Fig. 5; in the latter, bush 14 is rotated by 45° relatively to the situation of Fig. 4, for a clearer individuation of grooves 24. In this condition, caused by the steam flow which expands in cap 10, bush 14 and the associated external covering 18 can only idle on body 12, the dragging of the part of sphere 28 protruding towards grooves 24 having stopped. Loosening or unscrewing cap 10 as a whole from the boiler is therefore impossibile, and as a consequence any danger of steam coming out which might hit the user is prevented. Of course, the suitable calibration or section of spring 34 may allow to reopen cap 10 only when the pressure inside the boiler is completely exhausted, or when the residual quantity is thought not to be dangerous.

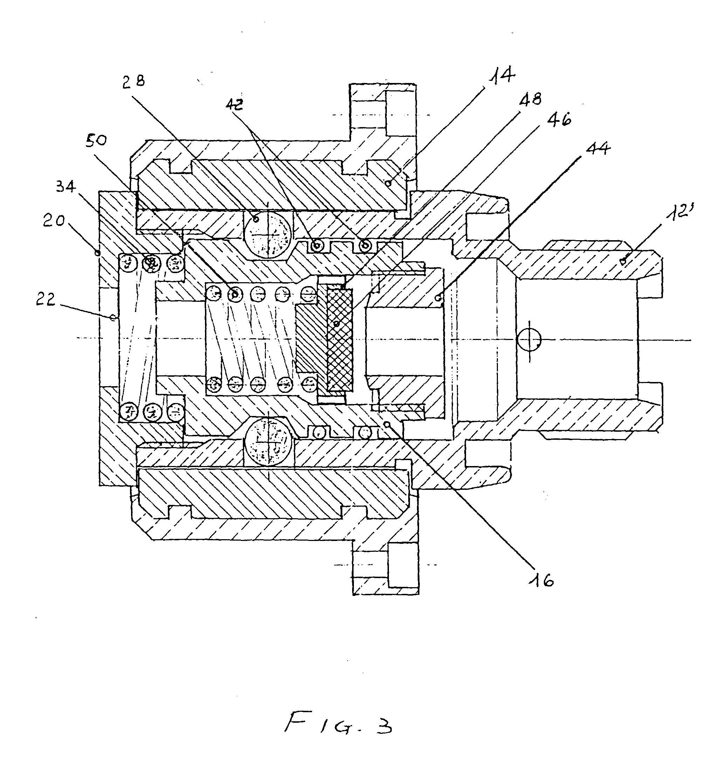

Fig. 3 shows the further situation of automatic opening of the valve integral with cap 10, in the presence of excess steam pressure in the boiler of the appliance. The aforementioned figure shows that gasket 46 with the associated front support 48 is removed from the hole obtained on ring 44. The high pressure within the boiler actually causes the compression of the suitably calibrated spring 50 and opens the exhaust duct, allowing steam to flow through the hole of ring 44, to distribute within piston 16 and to flow outwards from body 10 through hole 22 of the end cap 20.

As can be inferred from the above, the advantages provided by this invention are evident.

The cap subject matter of this invention ensures the utmost safety, excluding any possibility of intentional or accidental opening in the presence of steam pressure inside the boiler; one can also, depending on the mechanical characteristics of the elastic member inserted between the mobile piston and the end cap, grade at will the effort necessary to loosen or totally remove the safety cap from the support body.

Particularly advantageous is the presence of a safety valve integral with the cap which avoids the necessity of having recourse to further devices for the exhaust of steam, in the presence of a possible excess pressure in the boiler of the appliance.

However, this invention, as described hereabove and claimed hereunder, has been proposed only by way of example, meaning that said invention is susceptible of many modifications and variants.

For instance, a simplified embodiment may provide for a cap lacking the safety valve; said cap might also provide for the realization of the mobile piston integrally with the ring at the back.

Also the configuration of the perimetral hollow space provided on the aforementioned piston might be different from what has been described by way of example and illustrated; besides, instead of said hollow space, individual seats might be realized along the external perimeter of said piston in correspondence of the dragging spheres, which piston should then be provided with means suitable to prevent its rotation during the travel within the main support body.

## Claims

1. A safety cap for application to a tank of a steam producing appliance, comprising a hollow main support body (12) being longitudinally bored and having a substantially cylindrical shape and a back end (12') for connection to a mouth of the tank, a bush (14) fitted on said body (12) and being integral with an external covering (18) of plastic material, and a piston (16) fitted inside said body (12) for longitudinal displacement between a first position and a second position,characterized in that said body (12) comprises two or more radial through-holes (26) provided around the circumference thereof with a sphere (28) in each through-hole (26), that two or more longitudinal grooves (24) of hemispheric cross-section are formed along the inner surface of said bush (14) and a groove (36) is formed around the perimeter of said piston (16) at a location corresponding to the through-holes (26) when said piston (16) is in said second position, whereby said spheres (28) protrude from said through-holes (26) into said longitudinal grooves (24) if said piston (16) is in the first position and said spheres (28) are free to protrude into said peripheral groove (36), thereby clearing said longitudinal groove (24), if said piston (16) is in the second position.

2. The safety cap according to claim 1, wherein the inner surface of the bush (14) is provided with four longitudinal grooves (24) arranged at 90° relatively to one another.

3. The safety cap according to claim 1 or 2, wherein each through-hole (26) of the hollow body (12) is aligned to each groove (24) of the bush (14).

4. The safety cap according to any of the preceding claims, wherein the peripheral groove (36) has a trapezoid section and a depth at least equal to half of the diameter of each sphere (28).

5. The safety cap according to anyone of the preceding claims, wherein a spring (34) is located inside the hollow body (12) between a front end (16') of the piston (16) and a front end of the hollow body (12); a cap (20) with at least one central hole (22) is fitted on the front end of said body (12).

6. The safety cap according to claim 5, wherein the hollow body (12) has a smaller diameter back portion forming an annular portion (32) which restrains the travel of the piston (16) under tension by the spring (34).

7. The safety cap according to any of the preceding claims 5 and 6, wherein the bush (14) is blocked on the hollow body (12) by the cap (20) and arranged between said cap (20) and an increased diameter annular portion (14') of the hollow body (12).

8. The safety cap according to any of the preceding claims, wherein at least a further groove (40) is formed around the perimeter of the piston (16); a toric ring (42) being inserted within said further groove (40) to assure the pressure tightness between said piston (16) and the inner surface of the hollow body (12).

9. The safety cap according to any of the preceding claims, wherein a hollow ring (44) is integral to a back end of the piston (16) in the body portion located near the connection with the tank; said ring (44) partly fitting into said piston (16) and having on its front part a gasket (46) coupled to a guiding and centering metal support (48); and a spring (50) is located inside the piston (16) between said metal support (48) and a smaller diameter annular portion (52) provided at the front end of the piston (16).

10. The safety cap according to claim 9, wherein the gasket (46) is a disk having a diameter greater than the diameter of the hollow ring (44) and it is manufactured from rubber or a thermoplastic material.-

## Patentansprüche

1. Sicherheitsverschluß zur Verwendung bei einem Tank einer Dampf erzeugenden Vorrichtung mit einem hohlen Haupttragkörper (12), der in Längsrichtung gebohrt ist und eine im wesentlichen zylindrische Form und ein hinteres Ende (12') zum Anschließen an die Tanköffnung besitzt, einer Hülse (14), die auf dem Körper (12) sitzt und an die eine Außenabdeckung (18) aus Kunststoffmaterial angeformt ist, und einem Kolben (16), der zur Verschiebung in Längsrichtung zwischen einer ersten Stellung und einer zweiten Stellung in den Körper (12) eingesetzt ist, **dadurch gekennzeichnet,** daß der Körper (12) zwei oder mehr auf seinem Umfang vorgesehene radiale Durchgangsöffnungen (26) mit jeweils einer Kugel (28) darin besitzt, zwei oder mehr Längsnuten (24) mit halbkreisförmigem Querschnitt längs der Innenfläche der Hülse (14) ausgebildet sind und eine Nut (36) um den Umfang des Kolbens (16) an einer Stelle entsprechend der Lage der Durchgangsöffnungen (26) ausgebildet ist, wenn der Kolben (16) in seiner zweiten Stellung ist, wobei die Kugeln (28) aus den Durchgangsöffnungen (26) in die Längsnuten (24) hervorstehen, wenn sich der Kolben (16) in der ersten Stellung befindet, und die Kugeln (28) frei sind, in die Umfangsnut (36) zu ragen und dadurch die Längsnuten (24) freizugeben, wenn der Kolben (16) die zweite Stellung einnimmt.

2. Sicherheitsverschluß nach Anspruch 1, **dadurch gekennzeichnet,** daß die Innenfläche der Hülse (14) mit vier Längsnuten (24) versehen ist, die mit 90° relativ zueinander angeordnet sind.

3. Sicherheitsverschluß nach Anspruch 1 oder 2, **dadurch gekennzeichnet,** daß jede Durchgangsöffnung (26) des Hohlkörpers (12) zur jeweiligen Nut (24) der Hülse ausgerichtet ist.

4. Sicherheitsverschluß nach einem der Ansprüche 1 bis 3, **dadurch gekennzeichnet,** daß die Umfangsnut (36) einen trapezförmigen Querschnitt und eine Tiefe wenigstens gleich der Hälfte des Durchmessers der Kugeln (28) besitzt.

5. Sicherheitsverschluß nach einem der vorhergehenden Ansprüche, **dadurch gekennzeichnet,** daß innerhalb des Hohlkörpers (12) zwischen einem vorderen Ende (16') des Kolbens (16) und einem vorderen Ende des Hohlkörpers (12) eine Feder (34) angeordnet ist und auf dem vorderen Ende des Körpers (12) ein Verschluß mit wenigstens einem Mittelloch (22) sitzt.

6. Sicherheitsverschluß nach Anspruch 5, **dadurch gekennzeichnet,** daß der Hohlkörper (12) einen rückwärtigen Abschnitt kleineren Durchmessers besitzt, der einen ringförmigen Bereich (32) bildet, der die Wegstrecke des Kolbens (16) unter der Spannung der Feder (34) einschränkt.

7. Sicherheitsverschluß nach Anspruch 5 oder 6, **dadurch gekennzeichnet,** daß die Hülse (14) durch den Verschluß (20) auf dem Hohlkörper (12) verriegelt und zwischen dem Verschluß (20) und einem ringförmigen Bereich (14') des Hohlkörpers (12) mit vergrößertem Durchmesser angeordnet ist.

8. Sicherheitsverschluß nach einem der vorhergehenden Ansprüche, **dadurch gekennzeichnet,** daß wenigstens eine zusätzliche Nut (40) um den Umfang des Kolbens (16) ausgebildet ist und ein torischer Ring (42) in die zusätzliche Nut (40) eingefügt ist, um die Druckdichtheit zwischen dem Kolben (16) und der Innenfläche des Hohlkörpers (12) sicherzustellen.

9. Sicherheitsverschluß nach einem der vorhergehenden Ansprüche, **dadurch gekennzeichnet,** daß am hinteren Ende des Kolbens (16), in dem nahe dem Tankanschluß liegenden Bereich des Körpers ein Hohlring (44) angebaut ist, der zum Teil in dem Kolben (16) sitzt und an seinem vorderen Teil eine Dichtung (46) aufweist, die mit einer Führungs- und Zentrierhalterung (48) aus Metall verbunden ist, und innerhalb des Kolbens (16) zwischen der Metallhalterung (48) und einem am vorderen Ende des Kolbens (16) vorgesehenen ringförmigen Bereich kleineren Durchmessers eine Feder (50) angeordnet ist.

10. Sicherheitsverschluß nach Anspruch 9, **dadurch gekennzeichnet**, daß die Dichtung (46) eine Scheibe ist, die einen Durchmesser besitzt, der größer als der Durchmesser des Hohlrings (44) ist, und aus Gummi oder thermoplastischem Material hergestellt ist.

## Revendications

1. Capot de sécurité appliqué au réservoir d'un appareil de génération de vapeur, ce capot comprenant un corps principal de support creux (12), sensiblement cylindrique, traversé longitudinalement par un alésage et dont une extrémité postérieure (12') peut être réliée à l'embouchure d'un réservoir ; un manchon (14) emboîté sur ledit corps (12) et solidaire d'un revêtement extérieur (18) en une matière plastique ; et un piston (16) placé à l'intérieur du corps (12) de manière à pouvoir se déplacer dans la direction longitudinale entre une première position et une deuxième position,
caractérisé en ce que ledit corps (12) comprend au moins deux trous passants radiaux (26) prévus sur sa périphérie, une sphère (28) étant placée dans chaque trou traversant (26), en ce qu'au moins deux gorges longitudinales (24) de section transversale hémisphérique sont formées le long de la surface intérieure dudit manchon (14), et qu'une gorge (36) est formée autour du périmètre dudit piston (16) en un endroit correspondant aux trous traversants (26) lorsque le piston (16) est dans sa deuxième position, de manière à ce que lesdites sphères (28) fassent saillie des trous passants (26) vers les gorges longitudinales (24) lorsque le piston (16) est dans la première position, et que les sphères (28) puissent librement faire saillie dans la gorge périphérique (36), la gorge longitudinale (24) étant ainsi libérée lorsque le piston (16) est dans la deuxième position.

2. Capot de sécurité selon la revendication 1, dans lequel la surface intérieure du manchon (14) comprend quatre gorges longitudinales (24) prévues à une distance de 90° les unes par rapport aux autres.

3. Capot de sécurité selon la revendication 1 ou 2, dans lequel chaque trou traversant (26) du corps creux (12) est aligné avec chaque gorge (24) du manchon (14).

4. Capot de sécurité selon l'une des revendications précédentes, dans lequel la gorge périphérique (36) a une section trapézoïdale et une profondeur au moins égale à la moitié du diamètre de chaque sphère (28).

5. Capot de sécurité selon l'une des revendications précédentes, dans lequel un ressort (34) est placé à l'intérieur du corps creux (12) entre une extrémité antérieure (16') du piston (16) et une extrémité antérieure du corps creux (12), un capot (20) présentant au moins un trou central (22) étant adapté sur l'extrémité antérieur dudit corps (12).

6. Capot de sécurité selon la revendication 5, dans lequel le corps creux (12) comporte une partie postérieure de plus petit diamètre, formant une partie annulaire (32) qui freine la course du piston (16) sous la tension du ressort (34).

7. Capot de sécurité selon les revendications 5 et 6, dans lequel le manchon (14) est bloqué sur le corps creux (12) par le capot (20) et agencé entre le capot (20) et une portion annulaire (14') de plus grand diamètre du corps creux (12).

8. Capot de sécurité selon l'une des revendications précédentes, dans lequel au moins une gorge supplémentaire (40) est formée autour du périmètre du piston (16), un joint torique (42) étant inséré dans cette gorge supplémentaire (40) pour assurer l'étanchéité à la pression entre ledit piston (16) et la surface intérieure du corps creux (12).

9. Capot de sécurité selon l'une des revendications précédentes, dans lequel un anneau creux (44) est solidaire d'une extrémité postérieure du piston (16) dans la partie du corps placée au vosinage du réservoir, ledit anneau (44) étant partiellement inséré dans le piston (16), et présentant sur sa partie antérieure un joint d'étanchéité (46) couplé à un support métallique (48) de guidage et de centrage, et un ressort (50) est disposé à l'intérieur du piston (16) entre ledit support métallique (48) et une portion annulaire (52) de plus petit diamètre prévue sur l'extrémité antérieure du piston (16).

10. Capot de sécurité selon la revendication 9, dans lequel le joint (46) est un disque dont le diamètre est supérieur à celui de l'anneau creux (44) et qui est réalisé en caoutchouc ou en une matière thermoplastique.
